# EUROPÄISCHE PATENTANMELDUNG

(11) **EP 4 763 003 A1**
(43) Veröffentlichungstag der Anmeldung: **24.06.2026**
(21) Anmeldenummer: 25222397.9
(22) Anmeldetag: 10.12.2025
(51) Int. Cl.: A47G 29/14, E05G 1/10, G06V 20/52, G07F 11/62, G07F 17/12, G07G 1/00, H04N 7/18

(54) **FACHANLAGE MIT BESCHÄDIGUNGSPRÜFUNG**

(30) Priorität: 20.12.2024 DE 102024139380
(71) Anmelder: Deutsche Post AG, 53113 Bonn (DE)
(72) Erfinder: KAMB, Dennis, 51503 Rösrath (DE); NÄGEL, Ulf, 54595 Prüm (DE); FRANKE, Christian-Jochum, 53111 Bonn (DE)
(74) Vertreter: Cohausz & Florack

(57) **Zusammenfassung**

Beschrieben und dargestellt ist eine Fachanlage (1) mit einer Mehrzahl von Fächern zum Einlegen und Entnehmen von Packstücken (6) und einer Mehrzahl von zwischen einer Verschlussstellung zum Verschließen des jeweils zugeordneten Fachs (2,9) und einer Freigabestellung zum Freigeben des jeweils zugehörigen Fachs (2,9) für das Einlegen und Entnehmen von Packstücken (6) verstellbaren Klappen (7). Damit der logistische Aufwand infolge von beschädigten Packstücken verringert werden kann, ist vorgesehen, dass wenigstens einem Fach (2,9) wenigstens ein Sensor (13,14,15,20) zum Erfassen wenigstens eines Messsignals betreffend des in das Fach (2,9) eingelegten Packstücks (6) zugeordnet ist, dass der Sensor (13,14,15,20) mit einer Auswerteeinheit (17) zum Abschätzen der Wahrscheinlichkeit einer möglichen Mindestbeschädigung des in das Fach (2) eingelegten Packstücks (6) anhand des erfassten Messsignals verbunden ist und dass die Auswerteeinheit (17) mit einer Steuereinrichtung (21), zur Steuerung der Fachanlage (1) in Abhängigkeit der Wahrscheinlichkeit einer möglichen Mindestbeschädigung des Packstücks (6) verbunden ist.

## Beschreibung

Die Erfindung betrifft eine Fachanlage mit einer Mehrzahl von Fächern zum Einlegen und Entnehmen von Packstücken und einer Mehrzahl von zwischen einer Verschlussstellung zum Verschließen des jeweils zugeordneten Fachs und einer Freigabestellung zum Freigeben des jeweils zugehörigen Fachs für das Einlegen und Entnehmen von Packstücken verstellbaren Klappen.

Fachanlagen der genannten Art finden beispielsweise in Form von Schließfach- oder Paketfachanlagen vielfältig Anwendung. Ein Beispiel für eine Fachanlage ist eine Paketstation, welche zum Empfangen oder Versenden von Packstücken, insbesondere Postsendungen, genutzt wird. Beim Empfangen von Packstücken durch einen Nutzer werden diese von einem Betreiber, etwa in Form eines Lieferanten oder Zustellers, in unterschiedliche Fächer der Fachanlage eingelegt. Die Fächer werden nach dem Einlegen der Packstücke mittels Klappen, die auch die Form einer Tür aufweisen können, verschlossen und die Klappen sodann verriegelt. Zum erneuten Öffnen der Klappe muss sich der Nutzer als hierfür berechtigt ausweisen, etwa mit einem Code. Bei diesem Code kann es sich beispielsweise um einen Barcode, DataMatrix-Code, oder QR-Code handeln. Andere Arten der Authentifizierung sind ebenfalls denkbar, wie etwa mittel RFID-Chip oder Magnetstreifen, der bedarfsweise auf eine Karte ähnlich einer Kreditkarte aufgebracht ist. Dem Nutzer wird zudem mitgeteilt, dass ein Packstück zur Abholung in der Fachanlage bereitliegt und beispielsweise der zur Abholung des Packstücks erforderliche QR-Code zugesendet. Der Nutzer kann dann die Klappe des Fachs, in dem sich das für den Nutzer zur Abholung bereitliegende Packstück befindet, öffnen und das Packstück entnehmen. Zum Versenden kann der Nutzer eine Klappe der Fachanlage entriegeln und sodann öffnen, um in das zugehörige Fach das zu versendende Packstück einzulegen. Anschließend kann der Nutzer das Fach schließen und die zugehörige Klappe verriegeln. Bedarfsweise kann der Nutzer der Fachanlage noch Informationen über das Packstück mitgeben, etwa Informationen betreffend den Absender, den Empfänger oder die Art des Packstücks bzw. der Sendung.

Die Packstücke der genannten Art werden typischerweise durch in Packmitteln verpackte Packgüter gebildet. Bei den Packmitteln kann es sich dabei vorzugsweise um Kartons, Taschen oder Beutel handeln. Welches Packmittel im Einzelnen verwendet wird, hängt meist von der Art und Größe des zu verpackenden Packguts ab, das selbst regelmäßig eine für das Einlegen in eine Fachanlage geeignete Ware ist.

In der Praxis kommt es immer wieder vor, dass sich in den Fächern beschädigte Packstücke befinden. Dabei können sowohl die Packmittel als auch die Packstücke beschädigt sein. Unter Umständen sind sowohl die Packmittel als auch die Packgüter beschädigt. Insbesondere bei Packstücken mit beschädigten Packmitteln kann es beim Weitertransport leicht zu einer Beschädigung auch der Packgüter kommen. Das Transportieren von beschädigten Packgütern ist zudem in vielen Fällen unnötig, weil die Packstücke dann meist reklamiert und zurückgesendet werden. Oft muss dann ein neues Packstück versendet werden, damit der Nutzer ein gewünschtes Packgut unversehrt erhält. Zudem stellt es für den Nutzer häufig ein Ärgernis dar, wenn er sich zu einer Fachanlage begibt, nur um dort ein Packstück abzuholen, bei dem das Packgut beschädigt ist und nicht bestimmungsgemäß verwendet werden kann.

Daher liegt der vorliegenden Erfindung die Aufgabe zugrunde, die Fachanlage der eingangs genannten und zuvor näher erläuterten Art derart auszugestalten und weiterzubilden, dass ein logistischer Aufwand infolge von beschädigten Packstücken verringert werden kann.

Diese Aufgabe ist bei einer Fachanlage nach dem Oberbegriff des Anspruchs 1 dadurch gelöst, dass wenigstens einem Fach wenigstens ein Sensor zum Erfassen wenigstens eines Messsignals betreffend des in das Fach eingelegten Packstücks zugeordnet ist, dass der Sensor mit einer Auswerteeinheit zum Abschätzen der Wahrscheinlichkeit einer möglichen Mindestbeschädigung des in das Fach eingelegten Packstücks anhand des erfassten Messsignals verbunden ist und dass die Auswerteeinheit mit einer Steuereinrichtung, zur Steuerung der Fachanlage in Abhängigkeit der Wahrscheinlichkeit einer möglichen Mindestbeschädigung des Packstücks verbunden ist.

Die Fachanlage umfasst wenigstens ein Fach, das mittels wenigstens einem Sensor überwacht wird, um anhand des Messsignals dieses wenigstens einen Sensors eine Aussage darüber ableiten zu können, ob ein in das Fach eingelegtes Packstück wahrscheinlich eine Mindestbeschädigung aufweist, die ein bestimmtes Verhalten der Fachanlage zweckmäßig erscheinen lässt. Um dieses Verhalten der Fachanlage auszulösen, muss die Wahrscheinlichkeit nicht quantitativ, schon gar nicht genau, ermittelt werden. Eine qualitative Abschätzung der entsprechenden Wahrscheinlichkeit wird in vielen Fällen ausreichend sein. Eine genauere Ermittlung der Wahrscheinlichkeit einer bestimmten Mindestbeschädigung kann natürlich dennoch vorgesehen sein. Dabei ist zu berücksichtigen, dass die Beschädigung des Packstücks, die sich in einer Beschädigung des Packmittels und/oder des Packguts ausdrücken kann, nicht direkt gemessen werden muss, weshalb die Messung mit dem wenigstens einen Sensor regelmäßig lediglich eine Wahrscheinlichkeit über eine bestimmte Mindestbeschädigung erlauben wird.

Hinzu kommt, dass auch die Mindestbeschädigung regelmäßig keine exakte quantitative Größe sein wird. Wenn die Packstücke sehr unterschiedlich sind, kann nicht oder nur schwer für alle möglichen Packstücke eine exakte Mindestbeschädigung festgelegt und angegeben werden können, ab der ein bestimmtes Verhalten der Fachanlage angezeigt ist. Die Mindestbeschädigung wird daher vorzugsweise recht allgemeingültig und unabhängig von einem konkreten Packmittel und/oder Packgut definiert sein, um die Fachanlage in der gewünschten Weise für unterschiedliche Packstücke betreiben zu können. Zudem wird die Mindestbeschädigung und die Wahrscheinlichkeit, dass diese Mindestbeschädigung eintritt, erfindungsgemäß bevorzugt so gewählt sein, dass nur mit sehr hoher Wahrscheinlichkeit sehr erheblich beschädigte Packstücke dazu führen, dass die Fachanlage ein vorbestimmtes Verhalten zeigt. Denn in vielen Fällen kann wohl eher in Kauf genommen werden, dass versehentlich erheblich beschädigte Packstücke nicht als solche erkannt werden, anstatt nicht beschädigte Packstücke so zu behandeln, als wenn diese erheblich beschädigt wären.

Die Abschätzung, wie wahrscheinlich es ist, dass das in ein bestimmtes Fach der Fachanlage eingelegte Packstück eine Mindestbeschädigung aufweist, kann direkt von einer Auswerteeinheit der Fachanlage vorgenommen werden. Zu diesem Zweck wird das wenigstens eine Messsignal betreffend des in das Fach eingelegten Packstücks, welches von dem wenigstens einen dem betreffenden Fach zugeordneten Sensor ermittelt worden ist, von dem Sensor an die Auswerteeinheit weitergeleitet. Die Fachanlage umfasst daher wenigstens eine hierfür geeignete Verbindung zwischen dem wenigstens einen Sensor und der Auswerteeinheit. Zudem ist die Auswerteeinheit mittels einer geeigneten Verbindung mit einer Steuereinrichtung verbunden, welche die Fachanlage in Abhängigkeit der Wahrscheinlichkeit einer möglichen Mindestbeschädigung steuern kann. Dabei ist zu berücksichtigen, dass die Auswerteeinheit und die Steuereinrichtung keine räumlich separaten Einheiten sein müssen, sondern zu einer Baueinheit, insbesondere in einem gemeinsamen Gehäuse, zusammengefasst sein können.

Es ist auch nicht erforderlich, dass die Auswerteeinheit der Fachanlage alle erforderlichen Schritte zur Abschätzung der Wahrscheinlichkeit einer Mindestbeschädigung eines Packstücks selbst durchführt. Die Auswerteeinheit kann sich hierzu auch einer von der Fachanlage entkoppelten zentralen Recheneinheit bedienen, welche wenigstens bestimmte der vorgenannten Schritte ausführt, und zwar vorzugsweise für eine Mehrzahl von unterschiedlichen Fachanlagen. Bei der zentralen Recheneinheit kann es sich um ein Rechenzentrum, eine Überwachungseinrichtung und/oder einen Server handeln, wobei die Recheneinheit zur Abschätzung der Wahrscheinlichkeit der Mindestbeschädigung der Packstücke verschiedener Fachanlagen vorzugsweise auf eine gemeinsame Datenbank zugreift. Die Auswerteeinheit sollte bei Nutzung einer zentralen Recheneinheit wenigsten die Messignale des wenigstens einen Sensors sammeln, aufbereiten und an die zentrale Recheneinheit weiterleiten. Die zentrale Recheneinheit kann die anhand dieser Daten ermittelten Informationen an die Fachanlage zurücksenden, und zwar insbesondere an die Auswerteeinheit oder direkt an die Steuereinrichtung. Im Ergebnis ist die Verbindung zwischen der Auswerteeinheit und der Steuereinrichtung direkt in der Fachanlage vorgesehen oder aber über die zentrale Recheneinheit. Unabhängig davon müssen die Verbindungen nicht körperlich sein, sondern können auch drahtlos erfolgen. Die relevanten Informationen sollen zwischen der Auswerteeinheit und der Steuereinrichtung kommuniziert werden. Auf welchen Wegen dies im Einzelfall zu erfolgen hat, kann in weiten Bereichen frei gewählt werden. Die zentralen Recheneinheiten der genannten Art sind grundsätzlich aus dem Stand der Technik bekannt und bedürfen daher hier keiner weiteren, eingehenderen Erläuterung.

Unabhängig von der Art der Auswerteeinheit kann beispielsweise für den Fall, dass die Auswerteeinheit ein Packstück als mit einer hinreichenden Wahrscheinlichkeit in einem Mindestmaß beschädigt ansieht, über die Steuereinrichtung die Annahme dieses Packstücks durch die Fachanlage verweigert werden. So kann beispielsweise ein für das Einlegen von unbeschädigten Packstücken vorgesehener Prozess vorzeitig beendet werden, bevor alle mit dem Einlegen des Packstücks in die Fachanlage verbundenen Verfahrensschritte abgeschlossen sind. Möglich ist beispielsweise, dass die Klappe des zugehörigen Fachs nicht geschlossen und/oder verriegelt wird. Der Benutzer wird dann das Packstück nicht in der Fachanlage zurücklassen, sondern wieder mitnehmen, damit es nicht in falsche Hände gerät. Dies gilt insbesondere, wenn der Benutzer von der Fachanlage direkt oder indirekt die Mitteilung erhält, dass das Packstück als beschädigt erkannt worden ist und somit die Annahme verweigert wird.

Vorliegend kann unter dem Begriff "Benutzer" sowohl ein Betreiber der Fachanlage, etwa in Form eines Lieferanten oder Zustellers, als ach ein Nutzer verstanden werden, welcher an ihn gerichtete, zur Fachanlage transportierte Packstücke aus der Fachanlage entnimmt oder an Dritte gerichtete Packstücke zum Abtransport in die Fachanlage einlegt. Der Nutzer kann mithin als Endkunde verstanden werden, während der Betreiber als ein Dienstleister verstanden werden kann, dem sich die Nutzer bedienen. Das Zusammenfassen von Nutzer und Betreiber zum Benutzer ist vorliegend zweckmäßig, da es nachfolgend oft von keiner, jedenfalls keiner wesentlichen, Bedeutung ist, ob die Interaktion der Fachanlage mit dem Betreiber oder dem Nutzer erfolgt. Die Verwendung des Sammelbegriffs Benutzer vereinfacht also vorliegend das Verständnis.

Alternativ oder zusätzlich ist denkbar, dass für den Fall, dass die Auswerteeinheit mit oder ohne Rückgriff auf eine zentrale Recheneinheit ein Packstück mit einer hinreichenden Wahrscheinlichkeit als in einem Mindestmaß beschädigt ansieht, über die Steuereinrichtung veranlasst wird, dass das Packstück wieder zurückgesendet wird, ohne dass der Nutzer sich zur Fachanlage begeben, das Packstück aus dem entsprechenden Fach der Fachanlage entnehmen und inspizieren muss. Wenn das Packstück also beispielsweise auf dem Weg in die Fachanlage beschädigt worden ist, kann es dem Nutzer erspart werden, das Packstück abzuholen. Es kann stattdessen so behandelt werden, als wäre es zum Zwecke der Rücksendung in die Fachanlage eingelegt worden. Bedarfsweise kann der Nutzer hierüber durch die Steuereinrichtung informiert werden, so dass er gegenüber der Fachanlage mitteilen kann, dass er mit der Rücksendung nicht einverstanden ist, sondern das Packstück lieber abholen will, auch wenn dieses mit hoher Wahrscheinlichkeit so stark beschädigt ist, dass ein bestimmungsgemäßer Gebrauch des Packguts nicht mehr möglich ist.

Die Steuereinrichtung kann auch dazu ausgebildet sein, anhand der Wahrscheinlichkeit einer möglichen Mindestbeschädigung eines Packstücks eine Information an den Benutzer der Fachanlage zu kommunizieren. Dazu kann die Fachanlage dazu ausgebildet sein, diese Information an einer Anzeige der Fachanlage anzuzeigen und/oder an ein, insbesondere mobiles, Kommunikationsgerät des Benutzers zu senden. Zusätzlich kann noch ein akustisches Signal von der Fachanlage abgegeben werden.

Bei einer ersten besonders bevorzugten Ausgestaltung der Fachanlage ist vorgesehen, dass die Steuereinrichtung dazu ausgebildet ist, anhand der Wahrscheinlichkeit einer möglichen Mindestbeschädigung eines Packstücks eine Information an den Betreiber zu kommunizieren. Diese Kommunikation kann auf unterschiedliche Arten erfolgen. Der Einfachheit halber kann die Fachanlage beispielsweise dazu ausgebildet sein, die Information an einer Anzeige der Fachanlage anzuzeigen und/oder an ein, insbesondere mobiles, Kommunikationsgerät des Betreibers zu senden. Wenn sich die Information an einen Betreiber richtet, der gerade dabei ist, ein Packstück in die Fachanlage einzulegen, kann es sich anbieten, die Information über ein Display oder dergleichen anzuzeigen. Zusätzlich kann noch ein akustisches Signal von der Fachanlage abgegeben werden. Wenn es sich dagegen um einen Betreiber handelt, der erst noch zum Zwecke des Abholens des Packstücks aus der Fachanlage zur Fachanlage kommen müsste, bietet es sich beispielweise an, die Information an ein Kommunikationsgerät des Betreibers, wie ein mobiles Kommunikationsgerät, etwa ein Mobiltelefon, des Betreibers zu senden. Als Betreiber kommen hier beispielsweise, Lieferanten oder Zusteller in Frage. Dabei können diese oder auch andere Betreiber so verstanden werden, dass sie nicht nur Packstücke in die Fachanlage einlegen, sondern alternativ oder zusätzlich auch die von Nutzern zum Abtransport in die Fachanlage eingelegten Packstücke aus den entsprechenden Fächern entnehmen.

Alternativ oder zusätzlich kann die Steuereinrichtung dazu ausgebildet sein, anhand der Wahrscheinlichkeit einer möglichen Mindestbeschädigung eines Packstücks eine Information an den dem Packstück zugeordneten Nutzer der Fachanlage zu kommunizieren. Diese Kommunikation kann auf unterschiedliche Arten erfolgen. Der Einfachheit halber kann die Fachanlage beispielsweise dazu ausgebildet sein, die Information an einer Anzeige der Fachanlage anzuzeigen und/oder an ein, insbesondere mobiles, Kommunikationsgerät des Nutzers zu senden. Wenn sich die Information an einen Nutzer richtet, der gerade dabei ist, ein Packstück in die Fachanlage einzulegen, kann es sich anbieten, die Information über ein Display oder dergleichen anzuzeigen. Zusätzlich kann noch ein akustisches Signal von der Fachanlage abgegeben werden. Wenn es sich dagegen um einen Nutzer handelt, der erst noch zum Zwecke des Abholens des Packstücks aus der Fachanlage zur Fachanlage kommen müsste, bietet es sich beispielweise an, die Information an ein Kommunikationsgerät des Nutzers, wie ein mobiles Kommunikationsgerät, etwa ein Mobiltelefon, des Nutzers zu senden. Als Nutzer kommen hier beispielsweise Adressaten der Packstücke in Frage.

Unabhängig davon kann die Steuereinrichtung dazu ausgebildet sein, anhand der Wahrscheinlichkeit einer möglichen Mindestbeschädigung eines Packstücks die Annahme des wenigstens einen Packstücks durch die Fachanlage abzulehnen. Es wird so möglicherweise ein unnötiger Transport des Packstücks vermieden, da in entsprechenden Fällen davon auszugehen ist, dass das Packstück nach erfolgtem Transport wegen einer erheblichen Beschädigung ohnehin wieder zurückgeschickt wird. Das Verweigern der Annahme kann erreicht werden, in dem die Steuereinrichtung dazu ausgebildet ist, anhand der Wahrscheinlichkeit einer möglichen Mindestbeschädigung eines Packstücks das Verriegeln einer einem bestimmten Fach zugeordneten Klappe zu blockieren. Alternativ oder zusätzlich kann die Steuereinrichtung auch dazu vorgesehen sein, das Entriegeln einer einem bestimmten Fach zugeordneten Klappe zu blockieren oder zu veranlassen.

Es kann beispielsweise vorgesehen sein, dass die Beschädigung eines Packstücks in einem besonderen Fach der Fachanlage ermittelt wird, das aber nicht für das dauerhafte Lagern des Packstücks vorgesehen und/oder eingerichtet ist. Wird beispielsweise eine vermeintliche erhebliche Beschädigung des Packstücks in diesem Fach erkannt, kann das Entriegeln der Klappen von leeren Fächern blockiert werden. Dann ist es dem Benutzer nicht möglich, das Packstück in ein zum Lagern des Packstücks vorgesehenes Fach einzulegen. Wird dagegen ein Packstück erst nach dem Einlegen des Packstücks in ein Fach und nach dem Verriegeln der dem Fach zugeordneten Klappe in der geschlossenen Stellung auf mögliche Beschädigungen untersucht, kann die Klappe zwangsweise wieder entriegelt werden, wenn eine erhebliche Beschädigung des Packstücks vermutet wird. Auch dann ist der Benutzer daran gehindert, das Packstück im Fach zurückzulassen. In einem solchen Fall sollte die Untersuchung des Packstücks auf Beschädigungen erfolgen, bevor der Benutzer den Prozess des Einlegens abgeschlossen hat, beispielweise die letzte Eingabe an der Fachanlage vorgenommen hat. So wird sichergestellt, dass der Benutzer nach der Untersuchung des Packstücks auf Beschädigungen noch vor Ort ist, um das entsprechende Packstück wieder mitzunehmen.

Die Steuereinrichtung kann bedarfsweise dazu ausgebildet sein, das Verriegeln und/oder das Entriegeln einer einem bestimmten Fach zugeordneten Klappe nur in Abhängigkeit von wenigstens einer vorbestimmten von der Steuereinrichtung erfassbaren Aktion eines Benutzers zu bewirken. Damit kann sichergestellt werden, dass die Packstücke in den Fächern in einer vorbestimmten Weise gehandhabt werden, und zwar abhängig davon, ob die Packstücke wahrscheinlich erheblich beschädigt sind oder nicht. Im Falle einer erheblichen Beschädigung kann beispielsweise, wenigstens die ordnungsgemäße Annahme des Packstücks verweigert werden. Beispielsweise wird von der Steuereinrichtung kein Fach zum Aufbewahren des Packstücks geöffnet oder es wird das Fach mit dem Packstück nicht geschlossen und/oder die diesem Fach zugeordnete Klappe nicht verriegelt. Wurde die Klappe bereits nach dem Einlegen geschlossen, kann die Steuereinrichtung die Klappe wieder entriegeln und/oder öffnen. Zusätzlich zu einer entsprechenden Verhinderung des Schließens und/oder Verriegelns sowie zu einer entsprechenden zwangsweisen Entriegelung und/oder Öffnung einer Klappe kann noch ein optisches und/oder akustisches Signal von der Fachanlage abgegeben werden, um dem Benutzer zu signalisieren, dass der gewünschte Vorgang des Einlegens des Packstücks nicht ordnungsgemäß durchgeführt worden ist. Es kann von der Steuereinrichtung auch, bedarfsweise nach erfolgter Bestätigung durch den Benutzer, eine Reduzierung der Deckungssumme der Versicherung des Packstücks und/oder die Erhöhung der Versandkosten bewirkt werden. Die Steuereinheit kann auch bewirken, dass das Packstück als eine Retoure angesehen und behandelt wird. Mit anderen Worten, das Packstück kann zurückgeschickt werden, bedarfsweise nach vorheriger Bestätigung durch den Nutzer, der das Packstück bei Verweigerung der Bestätigung trotzdem an der Fachanlage abholen kann.

Die von der Steuereinrichtung erfassbare Aktion des Benutzers kann der Einfachheit halber eine Eingabe an einer Bedieneinheit, etwa an einem Terminal, der Fachanlage sein. Alternativ oder zusätzlich ist es aber auch denkbar, dass vom Benutzer eine Information an die Fachanlage oder an eine mit der Fachanlage in Wechselwirkung stehende externe Empfangseinheit gesendet wird. Die Empfangseinheit kann lokal von der Fachanlage entkoppelt sein. Beispielsweise kann eine Eingabe in einer App eines Mobiltelefons getätigt werden. Diese wird dann in einer zentralen Recheneinheit bearbeitet, wobei die zentrale Recheneinheit mit der Fachanlage Informationen austauschen kann. Beispielsweise auf diesem Wege kann eine Information an die Steuereinrichtung der Fachanlage gesendet werden, ohne die Information direkt an der Fachanlage eingeben zu müssen. Selbstverständlich kann die Information auch direkt an die Steuereinrichtung der Fachanlage gesendet werden. Dann ist die Einbindung einer zentralen Recheneinheit nicht zwingend erforderlich. Die direkt oder indirekt an die Steuereinrichtung gesendete Information wird vom Benutzer bevorzugt drahtlos gesendet, wozu sich der Benutzer weiter vorzugsweise eines Mobiltelefons bedienen kann.

In vielen Fällen kann es sich als zweckmäßig erweisen, wenn der Benutzer aus verschiedenen Optionen betreffend die weitere Handhabung eines Packstücks auswählen kann, insbesondere wenn das Packstück von der Auswerteeinheit mit oder ohne Rückgriff auf eine zentrale Recheneinheit als mit hinreichender Wahrscheinlichkeit eine Mindestbeschädigung aufweisend eingeschätzt wurde. Der Benutzer kann dann verhältnismäßig flexibel darauf reagieren, dass das entsprechende Packstück als mutmaßlich beschädigt erkannt wurde. Die zuvor angesprochene, von der Steuereinrichtung erfasste Aktion des Benutzers kann mithin eine entsprechende Auswahl einer der bereitgestellten Optionen sein. In einem einfachen Fall werden die Optionen zur Auswahl durch den Benutzer von der Fachanlage vorgeschlagen und angezeigt und/oder übermittelt. Zwingend ist dies aber nicht, und zwar insbesondere dann, wenn eine Kommunikation zwischen dem Benutzer und einer von der Fachanlage beabstandeten Recheneinheit erfolgt.

In einem einfachen Fall kann die Fachanlage oder eine andere Einheit auch lediglich um Bestätigung einer weiteren Handlung auffordern, was mittels der von der Steuereinrichtung erfassbaren Aktion bewerkstelligt wird. Dies bietet sich insbesondere dann an, wenn dem Benutzer keine mehreren Optionen zur Wahl stehen. Die von der Steuereinrichtung erfassbare Aktion kann auch in einem solchen Fall auf die zuvor beschriebenen Weisen getätigt werden.

Um zuverlässig erkennen und einschätzen zu können, ob ein Packstück übermäßig beschädigt ist, kann der wenigstens eine Sensor ein akustischer Sensor, insbesondere Mikrofon, ein elektromagnetischer Sensor, ein optischer Sensor, insbesondere eine Kamera, ein mechanischer Sensor und/oder ein thermischer Sensor, insbesondere Thermometer, sein. Auf diese Weise können Messignale aufgenommen werden, die sich hinsichtlich der Abschätzung von Beschädigungen zweckmäßig auswerten lassen.

Es kann auch von Vorteil sein, wenn es sich bei dem wenigstens einen Sensor um einen Feuchtigkeitssensor handelt. Der Feuchtigkeitssensor kann so ausgebildet und angeordnet sein, dass er möglicherweise aus dem Packstück auslaufende Flüssigkeit detektiert. Dies kann bedarfsweise über resistive oder kapazitive Messaufnehmer erfolgen, die aus dem Stand der Technik bekannt sind. Denkbar ist auch, dass das wenigstens eine Fach eine Bodenplatte mit Drähten, insbesondere Drahtwindungen, aufweist. Bei auslaufender, leitfähiger Flüssigkeit können dann einzelne Drähte bzw. Drahtwindungen von der Flüssigkeit kurzgeschlossen werden, so dass der elektrische Widerstand stark sinkt und somit ein Austreten von Flüssigkeit signalisieren kann.

Der wenigstens eine akustische Sensor kann beispielsweise dazu ausgebildet sein, beim Einlegen eines Packstücks in ein bestimmtes Fach der Fachanlage entstehende Geräusche zu erfassen und diese an die Auswerteeinheit weiterzuleiten. Wird ein Packstück mit einem beschädigten Packgut, etwa aus Glas, in das entsprechende Fach der Fachanlage eingelegt, kann ggf. ein Klirren oder dergleichen vernommen werden, was auf ein beschädigtes Packgut hindeuten kann. Bedarfsweise kann so auch erfasst werden, dass das Packstück erst durch ein unsachgemäßes Einlegen in das Fach beschädigt wird. Es kann dann gefolgert werden, dass der Benutzer für die Beschädigung verantwortlich sein dürfte. Das Messsignal des wenigstens einen akustischen Sensors kann von der Auswerteeinheit mit oder ohne Rückgriff auf eine zentrale Recheneinheit anhand einer Mustererkennung ausgewertet werden, um die Wahrscheinlichkeit einer Mindestbeschädigung abzuschätzen. Die eigentliche Mustererkennung kann dabei in der zentralen Recheneinheit durchgeführt werden, um in der jeweiligen Fachanlage weniger Rechenleistung und keine entsprechende Datenbank vorhalten zu müssen.

Die Mustererkennung basiert dann beispielsweise darauf, dass vorher die beim Einlegen von Packstücken mit beschädigten Packgütern in entsprechende Fächer aufgenommene Geräusche ermittelt worden sind. Denkbar ist auch, vorab Geräusche von einem unbeschädigten Packstück aufzunehmen, das erst durch ein unsachgemäßes Einbringen in das entsprechende Fach der Fachanlage beschädigt wird. Wenn für genügend Packstücke entsprechende Aufnahmen vorliegen, können in den entsprechenden Geräuschen, insbesondere mittels künstlicher Intelligenz, Muster identifiziert werden, welche auf eine Beschädigung des Packguts hindeuten. Werden diese Muster auch bei aktuell erfassten Messignalen erkannt, kann daraus auf eine entsprechende Beschädigung des in ein Fach eingelegten Packstücks geschlossen werden. Die Beschädigung betrifft dabei vorzugsweise das Packgut, da die Packmittel von Packstücken beim Einlegen in ein Fach typischerweise keine besonderen und/oder signifikanten Geräusche abgeben.

Alternativ oder zusätzlich kann wenigstens ein optischer Sensor zum Erzeugen von Aufnahmen von einem in ein bestimmtes Fach der Fachanlage eingelegten Packstücks vorgesehen sein. Dadurch kann beispielsweise die Größe des Packstücks in wenigstens einer Raumrichtung ermittelt und/oder eine auf dem Packstück angebrachte Adressinformation erkannt werden. Zudem lässt sich den Aufnahmen des wenigstens einen optischen Sensors von einem Packstück entnehmen, ob mit einer erheblichen Beschädigung des Packstücks zu rechnen ist, etwa wenn das Packstück deformiert ist. Das Messignal des wenigstens einen optischen Sensors kann an die Auswerteeinheit weitergeleitet werden. Auch in diesem Fall kann die Auswerteeinheit mit oder ohne Rückgriff auf eine zentrale Recheneinheit eine Mustererkennung durchführen, um daraus die Wahrscheinlichkeit einer Mindestbeschädigung abzuleiten. Die Mustererkennung beruht dabei auf Referenzmustern der Aufnahmen von beschädigten Packstücken. Werden solche Muster in den aktuellen Aufnahmen wiedererkannt, kann dies auf eine erhebliche Beschädigung des Packmittels und/oder des Packguts hindeuten. Die eigentliche Mustererkennung kann zur Einsparung von Rechnerleistung und einer entsprechenden Datenbank in der jeweiligen Fachanlage zentralisiert in der zentralen Recheneinheit durchgeführt werden.

Als der wenigstens eine optische Sensor, kommt beispielsweise eine Kamera, etwa eine 3D-Kamera in Frage, wobei 3D-Kameras die Graustufen oder Farbwerte der aufgenommenen Packstücke darstellen. Vorzugsweise kommt aber auch ein Scanner zum Scannen der Packstücke, insbesondere in Form eines Sechsseiten-Scanners und/oder eines Linienscanners, insbesondere eines RGB-Linienscanners, und/oder eines Volumenscanners, zum Einsatz, dem wenigstens einen Fach zugeordnet ist. Dann kann vorzugsweise die Auswerteeinheit dazu ausgebildet sein, mit oder ohne Rückgriff auf eine zentrale Recheneinheit anhand der Aufnahmen des Scanners die Art, Größe und/oder Beschaffenheit der eingelegten Packstücke zu ermitteln. Denkbar sind auch Lasersysteme zur Abstandsermittlung und somit Abtastung der Oberfläche der Packstücke. Solche Systeme können beispielsweise LiDAR-Systeme (Light detection and ranging-Systeme) sein, auch wenn diese aus Kostengründen regelmäßig weniger bevorzugt sein werden. Dies können relevante Eigenschaften sein, welche helfen können, die von anderen Sensoren erfassten Messsignale besser hinsichtlich einer möglichen Beschädigung auszuwerten. Beispielsweise können so insbesondere die Referenzmuster bei der Mustererkennung berücksichtigt werden, die an Packstücken der gleichen Art, Größe und/oder Beschaffenheit aufgenommen worden sind.

Im Falle wenigstens eines thermischen Sensors kann dieser ein temperaturabhängiges Signal von einem bestimmten Fach und/oder von einem in das bestimmte Fach eingelegten Packstück ermitteln. Das entsprechende Messsignal kann dann an die Auswerteeinheit weiterleitet werden, die vorzugsweise anhand des temperaturabhängigen Signals die Wahrscheinlichkeit einer Mindestbeschädigung ermittelt. In einigen Fällen kann eine Beschädigung eines Packguts zu einem Temperaturanstieg führen, etwa dann, wenn die Beschädigung des Packguts zu einer exothermen chemischen Reaktion führt. Um genauere Vorhersagen hinsichtlich einer möglichen Beschädigung treffen zu können, kann die Wahrscheinlichkeit einer Mindestbeschädigung anhand einer von der Auswerteeinheit mit oder ohne Rückgriff auf eine zentrale Recheneinheit ermittelten Temperaturdifferenz ermittelt werden. Als Temperaturdifferenz kommt dabei insbesondere eine solche zwischen der Temperatur des Packstücks und der Temperatur des entsprechenden Fachs oder eine Differenz der Temperaturen von dem entsprechenden Fach und der Umgebung der Fachanlage in Frage.

Alternativ oder zusätzlich kann in wenigstens einem dem wenigstens einen Sensor zugeordneten Fach eine Prüfstation zum Aufprägen von wenigstens einer vorbestimmten Prüfbewegung auf ein Packstück vorgesehen sein. Über die Prüfbewegung kann dann ein akustisches und/oder mechanisches Antwortsignal des Packstücks induziert werden, wobei das Antwortsignal dann abhängig von einer möglichen Beschädigung des Packstücks, insbesondere des Packmittels und/oder des Packguts, sein kann. In diesem Fall ist dem wenigstens einen Fach wenigstens ein akustischer und/oder mechanischer Sensor zugeordnet. Dieser wenigstens eine Sensor ist dann zur Aufnahme von Antwortsignalen ausgebildet, welche der Auswerteeinheit übergeben werden können. Die Auswerteeinheit kann dann mit oder ohne Rückgriff auf eine zentrale Recheneinheit anhand einer Mustererkennung der aufgenommenen Antwortsignale die Wahrscheinlichkeit einer Mindestbeschädigung ermitteln. Auch in diesem Fall werden zunächst eine Reihe von gleichartigen Antwortsignalen von Packstücken mit erheblichen Beschädigungen aufgenommen, anhand derer Muster erkennbar sind, welche auf eine Beschädigung hinweisen. Das Erkennen entsprechender Muster kann mittels künstlicher Intelligenz erfolgen. Auch das Wiedererkennen von entsprechenden Mustern in den aktuellen Antwortsignalen kann bedarfsweise unterstützt werden durch den Einsatz von künstlicher Intelligenz.

Grundsätzlich kann die Auswerteeinheit mit oder ohne Rückgriff auf eine zentrale Recheneinheit zur Durchführung einer Mustererkennung anhand einer Vielzahl von zuvor empirisch ermittelten Zusammenhängen von Geräuschen, Aufnahmen und/oder Antwortsignalen sowie möglichen Beschädigungen zugehöriger Packstücke, Packgüter und/oder Packmittel ausgebildet sein. Die grundlegenden Prinzipien sind dabei unabhängig von der Art des verwendeten Sensors und des entsprechenden Messsignals oder Antwortsignals. Bestimmte Unterschiede können aber trotzdem existieren.

Zur Erzeugung geeigneter Antwortsignale kann die Prüfstation zum Aufprägen der Prüfbewegung auf das Packstück wenigstens eine das Packstück tragende Grundplatte aufweisen. Diese Grundplatte kann dabei so ausgebildet sein, dass sie in wenigstens einer Raumrichtung bewegt und/oder um wenigstens eine Raumrichtung geschwenkt werden kann. So lassen sich recht spezifische Prüfbewegungen erzeugen, um mithin spezifische Antwortsignale zu induzieren. Zudem können so sehr viele unterschiedliche Prüfbewegungen eingestellt werden. Welche Prüfbewegung bei einem Packstück angewendet wird, kann dann abhängig sein von einem vorher an demselben Packstück aufgenommenen Antwortsignal und/oder von einem anderen Messsignal eines dem Fach zugeordneten Sensors. Als zweckmäßig hat es sich mithin erwiesen, wenn die Prüfstation dazu ausgebildet ist, die Prüfbewegung, insbesondere die Frequenz und/oder die Amplitude der Prüfbewegung, in vorbestimmter Weise an das jeweilige Packstück in Anhängigkeit des für dasselbe Packstück zuvor bereits ermittelte Antwortsignals und/oder in Abhängigkeit der Art, der Größe und/oder der Beschaffenheit des Packstücks angepasst wird.

Soweit vorliegend von künstlicher Intelligenz gesprochen wird, so werden damit insbesondere Systeme verstanden, die Informationen beispielsweise betreffen eine Mustererkennung und/oder betreffend die Wahrscheinlichkeit einer Mindestbeschädigung eines Packstücks ausgeben, deren Ermittlung auf computerimplementierten Verarbeitungs- bzw. Entscheidungsmustern beruhen, die zuvor in einer Lernphase auf Basis großer Datenmengen generiert worden sind. Man spricht in diesem Zusammen auf von "Machine Learning" und "Deep Learning"als einer Unterform des "Machine Learning". Diese Methoden sind an sich bekannt und müssen daher an dieser Stelle nicht vertieft werden. Der Fachmann kann diese Methoden ebenso wie Systeme der künstlichen Intelligenz aufgrund seines Fachwissens anwenden und unter Berücksichtigung der vorliegenden Beschreibung auf den vorliegenden Anwendungsfall anpassen. Aufgrund der zuvor erläuterten Zusammenhänge können die von Systemen der künstlichen Intelligenz ausgegebenen Informationen zu spezifischen Anfragen bzw. Eingangsinformationen nicht alleine über Programmierung, Konfiguration und Parametrisierung vorhergesagt werden. Eine solche Vorhersage kann bestenfalls auf Basis der Daten, mit denen das System angelernt wurde, getroffen werden. Die künstliche Intelligenz im vorliegenden Sinne wird sich daher vorzugsweise einer Datenbank einer nicht unerheblichen Größe bedienen.

Wenn vorliegend von dem Senden von Informationen an ein, insbesondere mobiles, Kommunikationsgerät des Benutzers gesprochen wird, kann diese Kommunikation beispielsweise per Bluetooth, SMS, E-Mail, Webinterface, Messenger-Dienst oder App erfolgen. Das mobile Kommunikationsgerät kann unabhängig davon ein Mobiltelefon oder ein anderes "handheld device" bzw. Handheldcomputer sein. Entsprechende Geräte sind aus dem Stand der Technik grundsätzlich bekannt.

Nachfolgend wird die Erfindung anhand einer lediglich ein Ausführungsbeispiel darstellenden Zeichnung näher erläutert. In der Zeichnung zeigt
- Fig. 1: eine erfindungsgemäße Fachanlage in einer schematischen perspektivischen Ansicht,
- Fig. 2: ein Fach der Fachanlage aus Fig. 1 in einer schematischen perspektivischen Ansicht,
- Fig. 3: das Fach aus Fig. 2 in einer schematischen Schnittansicht von der Seite und
- Fig. 4: die Prüfstation des Fachs aus Fig. 2 in einer schematischen Darstellung.

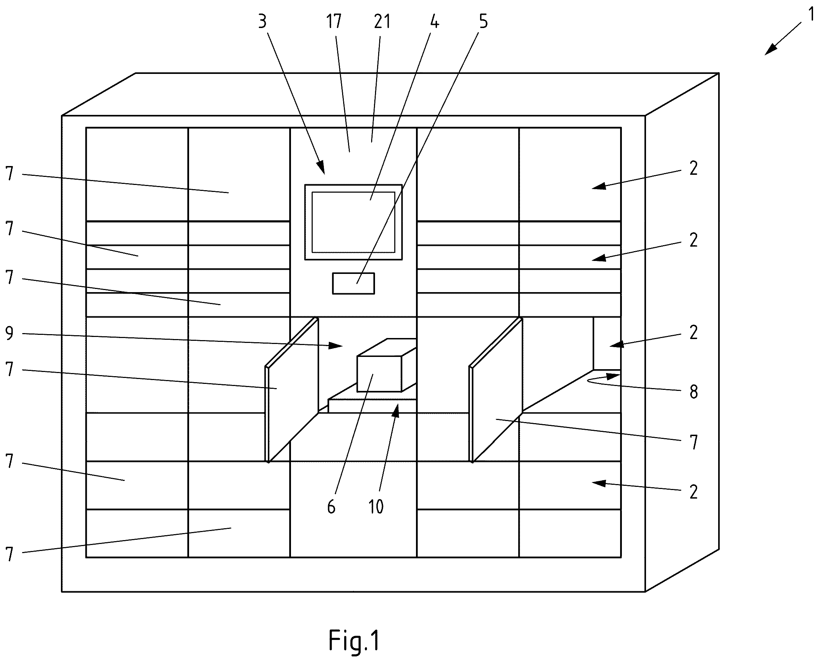

In der Fig. 1 ist eine Fachanlage 1 nach Art einer Paketstation mit einer Mehrzahl von Fächern 2 und einem Bedienterminal 3 dargestellt. Das Bedienterminal 3 umfasst ein Display 4 mit Touchscreen, über den Eingaben an der Fachanlage 1 getätigt werden können. Zudem ist ein Scanner 5 vorgesehen, um beispielsweise QR-Codes zum Zwecke eines Berechtigungsnachweises scannen zu können. Wenn ein Nutzer oder ein Betreiber dem Scanner 5 einen bestimmten QR-Code präsentiert, kann dann das Scannen dieses QR-Codes ein Öffnen eines Fachs 2 der Fachanlage 1 bewirken. Das Fach 2 kann leer sein, um ein Packstück 6 einlegen zu können oder das Fach 2 kann ein Packstück 6 enthalten, so dass der Nutzer oder der Betreiber der Fachanlage 1 das Packstück 6 auf dem Fach 2 entnehmen kann.

Die einzelnen Fächer 2 weisen unterschiedliche Größen auf und sind jeweils mit einer Klappe 7 versehen, die auch im Sinne einer Tür verstanden werden kann. Zwei der Fächer 2 sind mit der zugehörigen Klappe 7 in einer Freigabestellung dargestellt, in der das Fach 2 zum Einlegen und zum Entnehmen von Packstücken 6 freigegeben ist. Aus der Freigabestellung können die Klappen 7 in eine für die anderen Fächer 2 dargestellte Verschlussstellung verstellt werden, in denen die Klappen 7 die Fächer 2 verschließen, so dass keine Packstücke 6 in die Fächer 2 eingelegt oder aus den Fächern 2 entnommen werden können. Die Fächer 2 sind zudem mit einer Verriegelungseinrichtung 8 versehen, mit der die Klappen 7 in der geschossenen Stellung verriegelt werden können. Mit der entsprechenden Berechtigung können die Klappen 7 aber auch wieder entriegelt werden, um die Klappen 7 in die Freigabestellung verstellen zu können.

Die dargestellte und insoweit bevorzugte Fachanlage 1 weist in einem zentralen Fach 9 eine Prüfstation 10 auf, in der ein in die Fachanlage 1 einzulegendes Packstück 6 zunächst auf mögliche Beschädigung untersucht wird. Nach abgeschlossener Untersuchung kann das Packstück 6 dann in ein anderes Fach 2 eingelegt werden. Dort verbleibt das Packstück 6, bis es wieder aus der Fachanlage 1 abgeholt wird. Grundsätzlich könnten auch mehrere Fächer 2 mit einer Prüfstation 10 versehen sein. Denkbar wäre es auch, alle Fächer 2 mit einer Prüfstation 10 zu versehen. Dann könnte das Packstück 6 in dem entsprechenden Fach 2 verbleiben und müsste nicht zwingend noch anschließend in ein anderes Fach 2 eingelegt werden. Dann wäre aber die Fachanlage 1 deutlich aufwändiger in der Herstellung als die in der Fig. 1 dargestellte Fachanlage 1.

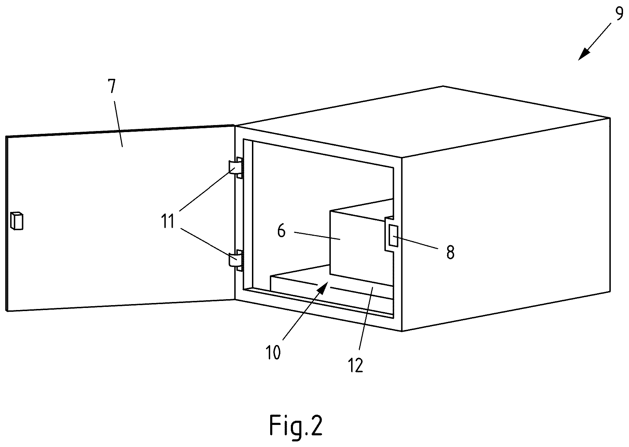

Das zentrale Fach 9 mit der Prüfstation 10 ist in der Fig. 2 dargestellt. Das Fach 9 weist eine Klappe 7 auf, die über seitliche Scharniere 11 zwischen der dargestellten Freigabestellung und einer das Fach 9 verschließenden Verschlussstellung hin und her geschwenkt werden kann. In der Verschlussstellung kann die Klappe 7 mit einer Verriegelungseinrichtung 8 verriegelt werden. Bei dem dargestellten und insoweit bevorzugten Fach 9 ist eine verstellbare Grundplatte 12 vorgesehen, auf die ein einzulegendes Packstück 6 aufgelegt wird.

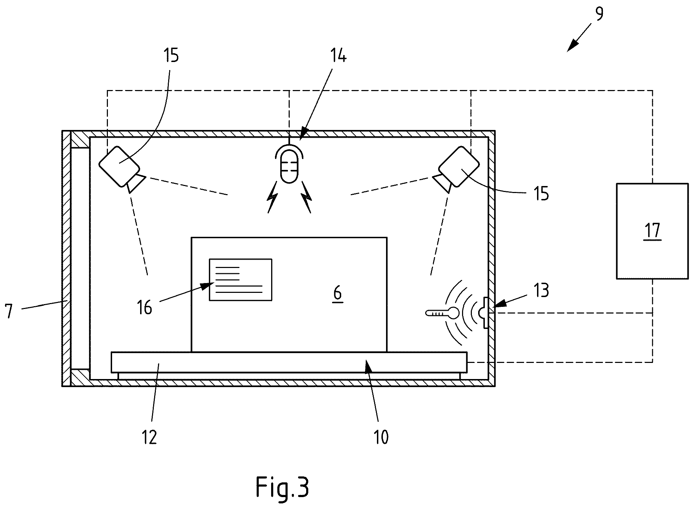

Darüber hinaus sind dem Fach 9, wie dies in der Fig. 3 schematisch dargestellt ist, noch mehrere Sensoren 13,14,15 zugeordnet. Dabei handelt es sich gemäß Fig. 3 um einen thermischen Sensor 13 in Form eines Thermometers, einen akustischen Sensor 14 in Form eines Mikrofons und optische Sensoren 15, welche einen Scanner zum Scannen des eingelegten Packstücks 6 bilden. Es können grundsätzlich auch weniger oder auch mehr sowie andere Sensoren 13,14,15 vorgesehen sein.

Mit den optischen Sensoren 15 können die Größe, Art und/oder Beschaffenheit des Packstücks 6 ermittelt werden. So kann beispielsweise ein Fach 2 einer ausreichenden Größe ausgewählt werden, in das das Packstück 6 nach dem Untersuchen auf Beschädigungen in dem zentralen Fach 9 eingelegt werden kann. Zudem kann beispielsweise eine Adressinformation 16 auf dem Packstück 6 erfasst werden. Es wird mit den optischen Sensoren 15 auch festgestellt, ob das Packstück 6 ungewöhnliche Deformationen aufweist. Diese können nämlich auf eine erhebliche Beschädigung hindeuten. Um zu bestimmen, ob eine Deformation des Packstücks 6 für eine Mindestbeschädigung des Packstücks 6 spricht, können die Aufnahmen der optischen Sensoren 15 von der Deformation einer Musterkennung durch die mit den Sensoren 13,14,15 verbundene Auswerteeinheit 17 der Fachanlage 1 unterzogen werden. Es werden dann Muster von Deformationen von Packstücken 6 mit einer Mindestdeformation in den Aufnahmen der optischen Sensoren 15 gesucht. Werden solche Muster gefunden, kann dies für eine Mindestbeschädigung auch des aktuell untersuchten Packstücks 6 sprechen.

Auf eine Mindestbeschädigung kann es auch hindeuten, wenn mit dem thermischen Sensor 13 eine erhöhte Temperatur des Packstücks 6 ermittelt wird. Diese kann sich beispielsweise ergeben, weil das in einem Packmittel verpackte Packgut beschädigt ist und so eine exotherme Reaktion auslöst. Über den akustischen Sensor 14 lassen sich Geräusche beim Einlegen des Packstücks 6 in das Fach 9 aufnehmen. Es kann so beispielsweise ein Klirren erfasst werden, was auf eine Beschädigung eines Packstücks, insbesondere Packguts, hinweisen kann.

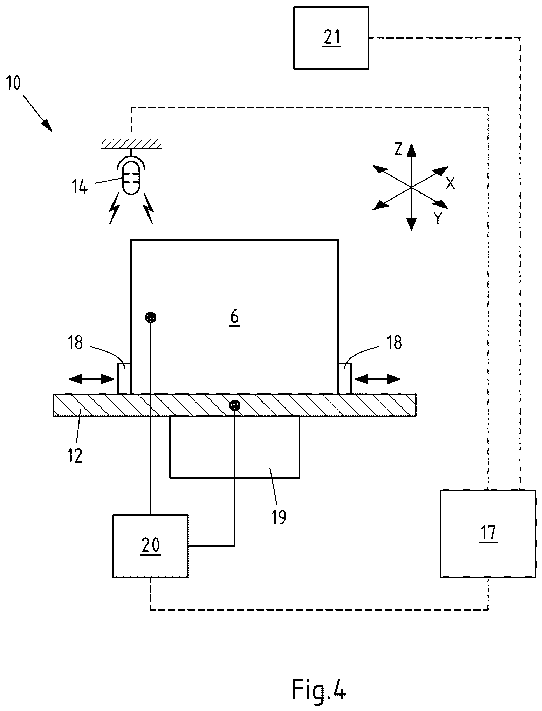

Um eine genauere Aussage über mögliche Beschädigungen des Packmittels und/oder des Packguts eines Packstücks 6 machen zu können, weist die Prüfstation 10 eine verstellbare Grundplatte 12 auf. Die Prüfstation 10 ist schematisch in der Fig. 4 dargestellt.

An der Grundplatte 12 sind verstellbare Halter 18 angebracht, welche in Anlage an unterschiedlich große, auf der Grundplatte 12 befindliche Packstücke 6 gebracht werden können, um das entsprechende Packstück 6 auf der Grundplatte 12 zu halten. Die Grundplatte 12 kann mittels einer Antriebseinrichtung 19 in den drei Raumrichtungen (x-, y- und z-Richtung) translatorisch bewegt werden. Zudem kann die Grundplatte 12 mittels der Antriebseinrichtung 19 - bedarfsweise überlappend zu einer entsprechenden translatorischen Bewegung der Grundplatte 12 - um die drei Raumrichtungen (x-, y- und z-Richtung) geschwenkt werden. Die Bewegung, welche auf diese Weise auf die Packstücke 6 übertragen wird, wird als die Prüfbewegung bezeichnet.

Die so auf die Packstücke 6 aufgeprägte Prüfbewegung induziert, zumindest potenziell, ein Antwortsignal, das akustischer und/oder mechanischer Natur sein kann. Das akustische Antwortsignal wird dabei vorzugsweise während der Übertragung der Prüfbewegung auf das Packstück 6 erzeugt und von dem akustischen Sensor 14 aufgefangen, während ein mechanisches Antwortsignal bedarfsweise erst nach der Prüfbewegung erzeugt werden kann, wenn das Antwortsignal nicht durch weitere Bewegungen des Packstücks 6 beeinträchtigt werden kann. Bedarfsweise kann der akustische Sensor 14 so eingestellt sein, dass er lediglich die Lautstärke des Antwortsignals bestimmter Schall-Frequenzen oder bestimmter Schall-Frequenzbänder erfasst. In vielen Fällen werden nämlich nur solche Informationen für eine Abschätzung signifikant sein, ob das jeweilige Packstück 6, insbesondere das Packgut, beschädigt ist oder nicht. Bedarfsweise kann diese Information auch für die Abschätzung genutzt werden, in welchem Maße das Packstück 6, insbesondere das Packgut, beschädigt ist. Dies lässt sich dann als Beschädigungsgrad angeben.

Das mechanische Antwortsignal kann durch wenigstens einen mechanischen Sensor 20 erfasst werden, der die Bewegung der beweglich gelagerten Grundplatte 12 und/oder die Bewegung des Packstücks 6 aufnimmt. Eine bewegliche Lagerung der Grundplatte 12 nach dem Aufprägen der Prüfbewegung erlaubt ein Nachschwingen oder dergleichen der Grundplatte 12 und damit des Packstücks 6. Es kann aber auch vorgesehen sein, dass die Grundplatte 12 nach dem Übertragen der Prüfbewegung auf das Packstück 6 festgelegt wird, um lediglich das Nachschwingen oder dergleichen des Packstücks 6 allein mit dem wenigstens einen mechanischen Sensor 20 aufnehmen zu können. Auf diese Weise kann beispielsweise die Schwingung, die Trägheit, die Auslenkung und/oder die Kraft erfasst werden, welche von der Grundplatte 12 und/oder vom Packstück 6 auf den mechanischen Sensor 20 übertragen wird. Dies erfolgt bedarfsweise richtungs- und/oder zeitabhängig, um ein Antwortsignal mit einer höheren Aussagekraft aufnehmen zu können.

Die auf ein bestimmtes Packstück 6 aufgeprägte Prüfbewegung kann anhand der Art, der Größe und/oder der Beschaffenheit des Packstücks 6 ausgewählt werden. Die Art, Größe und/oder Beschaffenheit kann dabei anhand der Aufnahme des wenigstens einen optischen Sensors 15 von dem Packstück 6 ermittelt werden, wie dies zuvor bereits beschrieben worden ist.

Alternativ oder zusätzlich wird auf ein Packstück 6 eine erste Prüfbewegung aufgeprägt und das wenigstens eine Antwortsignal aufgenommen. Daraus können Informationen über das in dem Packmittel des Packstücks 6 verpackte Packgut oder die potenzielle Beschädigung gewonnen werden, um so gezielt eine zweite Prüfbewegung auszuwählen, die dem Packstück 6 anschließend aufgeprägt wird. Denkbar ist es sogar anhand dieses zweiten Antwortsignals noch eine weitere Prüfbewegung auszuwählen und diese ebenfalls auf das Packstück 6 zu übertragen, um noch ein weiteres Antwortsignal zu erhalten. Die entsprechende Auswahl einer Prüfbewegung erfolgt durch die Auswerteeinheit 17, an welche die Antwortsignale weitergeleitet werden.

Wenigstens ein an einem Packstück 6 aufgenommenes Antwortsignal wird in der Auswerteeinheit 17, an die das Antwortsignal von dem wenigstens einen akustischen und/oder mechanischen Sensor 14,20 weitergeleitet wird, einer Mustererkennung unterzogen. Dabei kann das Antwortsignal mit einer Vielzahl von zuvor empirisch ermittelten Antwortsignalen verglichen werden, für welche die Beschädigung oder der Grad der Beschädigung des Packguts 6 dokumentiert ist. Aus ähnlichen Antwortsignalen kann dann auf ähnliche Beschädigungen oder Beschädigungsgrade geschlossen werden. Dabei ist jedoch kein vollständiger Vergleich der Antwortsignale erforderlich. Es reicht aus, wenn in dem neu aufgenommen Antwortsignal nach Mustern gesucht wird, welche charakteristisch für bestimmte Beschädigungen von Packstücken 6 sind. Um diese Muster ausfindig zu machen, kann sich einer künstlichen Intelligenz bedient werden. Ebenso kann sich einer künstlichen Intelligenz bedient werden, um aus dem Vergleich eines neuen Antwortsignals mit den vorbekannten, auf bestimmte Beschädigungen hinweisenden Mustern eine mögliche Beschädigung zu ermitteln.

Dabei muss lediglich abgeschätzt werden, ob mit einer hinreichenden Wahrscheinlichkeit eine Mindestbeschädigung vorliegt, ab der das betreffende Packstück 6 anders zu handhaben ist, als wenn kein Verdacht auf eine Beschädigung des Packstücks 6 bestünde. Es versteht sich, dass dies in vielen Fällen nur mit einer eingeschränkten Genauigkeit bestimmt werden kann. Die erfindungsgemäßen und zuvor bereits beschriebenen Vorteile können aber dennoch grundsätzlich erzielt werden.

Wenn die Auswerteeinheit 17 eine hinreichend wahrscheinliche Mindestbeschädigung des Packstücks zu erkennen glaubt, wird hierüber die mit der Auswerteeinheit 17 verbundene Steuereinrichtung 21 der Fachanlage 1 informiert. Die Steuereinrichtung 21 steuert die Fachanlage 1 dann entsprechend, also in Abhängigkeit der Wahrscheinlichkeit einer möglichen Mindestbeschädigung des Packstücks 6. Dies kann auf verschiedene Weisen geschehen.

Es kann vorgesehen sein, dass das zentrale Fach 9 weder vorgesehen noch eingerichtet ist, ein Packstück 6 dauerhaft aufzunehmen, sondern lediglich zur Untersuchung auf eine mögliche Beschädigung dient. Ist das Packstück 6 wahrscheinlich nicht beschädigt, öffnet die Steuereinrichtung 21 ein leeres Fach 2, in das das Packstück 6 eingelegt werden kann. Wenn das Packstück 6 aber als mit einer Mindestbeschädigung versehen angesehen wird, kann die Steuereinrichtung 21 darauf verzichten, ein leeres Fach 2 zu öffnen. Das beschädigte Packstück 6 kann dann nicht in der Fachanlage 1 zur Abholung und/oder zum Weitertransport abgelegt werden. Alternativ kann die Steuereinrichtung 21 verhindern, dass ein geöffnetes Fach 2 mit einer Klappe 7 verschlossen bzw. die Klappe 7 in der Verschlussstellung verriegelt wird. Das beschädigte Packstück 6 kann dann nicht in der Fachanlage 1 in einer üblichen Weise zur Abholung und/oder zum Weitertransport abgelegt werden.

Die Annahme des Packstücks 6 durch die Fachanlage 1 wird in beiden Fällen schlicht verweigert, weil es unsinnig erscheint, ein beschädigtes Packstück 6 weiter zu transportieren und/oder vom Benutzer abholen zu lassen. Dass die Annahme des Packstücks 6 aufgrund einer vermuteten Mindestbeschädigung verweigert wird, kann dem Benutzer an dem Display 4 des Bedienterminals 3 angezeigt werden. Oder der Benutzer bekommt möglicherweise eine entsprechende Information auf sein Mobiltelefon oder ein, insbesondere mobiles, Kommunikationsgerät gesendet.

Dem Benutzer kann dann die Möglichkeit eingeräumt werden, ein Weitertransportieren und/oder Abholen zu erzwingen, wie wenn das Packstück 6 unbeschädigt wäre. Dies kann aber bedarfsweise davon abhängig sein, dass der Benutzer höheren Versandkosten oder einer geringeren Deckungssumme zustimmt. Dabei kann grundsätzlich der Benutzer ein Betreiber der Fachanlage 1 sein oder ein Nutzer der Fachanlage 1 sein. Wenn der Betreiber ein Packstück 6 in die Fachanlage 1 einlegt, kann bedarfsweise der Nutzer, für den das Packstück 6 bestimmt ist, entscheiden, ob er das Packstück 6 trotz der vermuteten Beschädigung abholen oder direkt returnieren will. Da der Nutzer beim Einlegen des Packstücks 6 in die Fachanlage 1 nicht vor Ort ist, wird dem Nutzer eine Information gesendet. Um den Nutzer zum Abholen des Packstücks 6 zu bewegen, kann diesem eine höhere Deckungssumme und/oder geringere Versandkosten für das Packstück 6 angeboten werden.

Wenn ein Nutzer ein Packstück 6 in die Fachanlage 1 einlegen will, das die Auswerteeinheit 17 als sehr wahrscheinlich in einem Mindestmaß beschädigt ansieht, kann dem Nutzer an dem Display 4 eine Auswahl an Optionen angezeigt werden, von denen sich der Nutzer dann für eine Option entscheiden muss. Die Optionen können dabei ebenfalls höhere Versandkosten oder eine geringere Deckungssumme für das Packstück umfassen.

### Bezugszeichenliste

- 1: Fachanlage
- 2: Fach
- 3: Bedienterminal
- 4: Display
- 5: Scanner
- 6: Packstück
- 7: Klappe
- 8: Verriegelungseinrichtung
- 9: zentrales Fach
- 10: Prüfstation
- 11: Scharnier
- 12: Grundplatte
- 13: thermischer Sensor
- 14: akustischer Sensor
- 15: optischer Sensor
- 16: Adressinformation
- 17: Auswerteeinheit
- 18: Halter
- 19: Antriebseinrichtung
- 20: mechanischer Sensor
- 21: Steuereinrichtung

## Patentansprüche

1. Fachanlage (1) mit einer Mehrzahl von Fächern zum Einlegen und Entnehmen von Packstücken (6) und einer Mehrzahl von zwischen einer Verschlussstellung zum Verschließen des jeweils zugeordneten Fachs (2,9) und einer Freigabestellung zum Freigeben des jeweils zugehörigen Fachs (2,9) für das Einlegen und Entnehmen von Packstücken (6) verstellbaren Klappen (7),
**dadurch gekennzeichnet, dass** wenigstens einem Fach (2,9) wenigstens ein Sensor (13,14,15,20) zum Erfassen wenigstens eines Messsignals betreffend des in das Fach (2,9) eingelegten Packstücks (6) zugeordnet ist, dass der Sensor (13,14,15,20) mit einer Auswerteeinheit (17) zum Abschätzen der Wahrscheinlichkeit einer möglichen Mindestbeschädigung des in das Fach (2) eingelegten Packstücks (6) anhand des erfassten Messsignals verbunden ist und dass die Auswerteeinheit (17) mit einer Steuereinrichtung (21), zur Steuerung der Fachanlage (1) in Abhängigkeit der Wahrscheinlichkeit einer möglichen Mindestbeschädigung des Packstücks (6) verbunden ist.

2. Fachanlage nach Anspruch 1,
**dadurch gekennzeichnet, dass** die Steuereinrichtung (21) dazu ausgebildet ist, anhand der Wahrscheinlichkeit einer möglichen Mindestbeschädigung eines Packstücks (6) eine Information an den Betreiber der Fachanlage (1) zu kommunizieren und dass, vorzugsweise, die Fachanlage (1) dazu ausgebildet ist, diese Information an einer Anzeige, beispielsweise Display (4), der Fachanlage (1) anzuzeigen und/oder an ein, insbesondere mobiles, Kommunikationsgerät des Betreibers zu senden.

3. Fachanlage nach Anspruch 1 oder 2,
**dadurch gekennzeichnet, dass** die Steuereinrichtung (21) dazu ausgebildet ist, anhand der Wahrscheinlichkeit einer möglichen Mindestbeschädigung eines Packstücks (6) eine Information an den Nutzer zu kommunizieren und dass, vorzugsweise, die Fachanlage (1) dazu ausgebildet ist, diese Information an einer Anzeige der Fachanlage (1) anzuzeigen und/oder an ein, insbesondere mobiles, Kommunikationsgerät des Nutzers zu senden.

4. Fachanlage nach einem der Ansprüche 1 bis 3,
**dadurch gekennzeichnet, dass** die Steuereinrichtung (21) dazu ausgebildet ist, anhand der Wahrscheinlichkeit einer möglichen Mindestbeschädigung eines Packstücks (6) die Annahme des wenigstens einen Packstücks (6) durch die Fachanlage (1) abzulehnen und dass, vorzugsweise, die Steuereinrichtung (21) dazu ausgebildet ist, anhand der Wahrscheinlichkeit einer möglichen Mindestbeschädigung eines Packstücks (6) das Verriegeln einer einem bestimmten Fach (2,9) zugeordneten Klappe (7) zu blockieren und/oder das Entriegeln einer einem bestimmten Fach (2,9) zugeordnete Klappe (7) zu blockieren oder zu veranlassen.

5. Fachanlage nach einem der Ansprüche 1 bis 4,
**dadurch gekennzeichnet, dass** die Steuereinrichtung (21) dazu ausgebildet ist, das Verriegeln und/oder das Entriegeln einer einem bestimmten Fach (2) zugeordneten Klappe (7) nur in Abhängigkeit von wenigstens einer vorbestimmten von der Steuereinrichtung (21) erfassbaren Aktion eines Benutzers zu bewirken.

6. Fachanlage nach Anspruch 5,
**dadurch gekennzeichnet, dass** die von der Steuereinrichtung (21) erfassbare Aktion des Benutzers eine Eingabe an einer Bedieneinheit (3) der Fachanlage und/oder ein, insbesondere drahtloses, Senden einer Information an die Steuereinrichtung (21) ist und/oder dass die von der Steuereinrichtung (21) erfassbare Aktion des Benutzers eine Bestätigung einer, insbesondere von der Fachanlage (1), vorgeschlagenen Handhabung des Packstücks (6) oder eine Auswahl von mehreren, insbesondere von der Fachanlage (1), vorgeschlagenen Optionen ist.

7. Fachanlage nach einem der Ansprüche 1 bis 6,
**dadurch gekennzeichnet, dass** der wenigstens eine Sensor (13,14,15,20) ein akustischer Sensor (14), insbesondere Mikrofon, ein elektromagnetischer Sensor, ein optischer Sensor (15), insbesondere Kamera, ein mechanischer Sensor (20), ein thermischer Sensor (13), insbesondere Thermometer, und/oder ein Feuchtigkeitssensor ist.

8. Fachanlage nach Anspruch 7,
**dadurch gekennzeichnet, dass** der wenigstens eine akustische Sensor (14) die beim Einlegen eines Packstücks (6) in ein bestimmtes Fach (2,9) der Fachanlage (1) entstehenden Geräusche erfasst und an die Auswerteeinheit (17) weiterleitet und dass, vorzugsweise, die Auswerteeinheit (17) anhand einer Mustererkennung der aufgenommenen Geräusche die Wahrscheinlichkeit einer Mindestbeschädigung ermittelt.

9. Fachanlage nach Anspruch 7 oder 8,
**dadurch gekennzeichnet, dass** der wenigstens eine optische Sensor (15) Aufnahmen von einem in ein bestimmtes Fach (2,9) der Fachanlage (1) eingelegten Packstücks (6) erzeugt und an die Auswerteeinheit (17) weiterleitet und dass, vorzugsweise, die Auswerteeinheit (17) anhand einer Mustererkennung der Aufnahmen die Wahrscheinlichkeit einer Mindestbeschädigung ermittelt.

10. Fachanlage nach Anspruch 9,
**dadurch gekennzeichnet, dass** ein optischer Sensor (15) ein Scanner zum Scannen der Packstücke (6), insbesondere in Form eines Sechsseiten-Scanners und/oder eines Linienscanners, insbesondere eines RGB-Linienscanners, und/oder eines Volumenscanners, dem wenigstens einen Fach (2,9) zugeordnet ist und dass, vorzugsweise, die Auswerteeinheit dazu ausgebildet ist, anhand der Aufnahmen des Scanners die Art, Größe und/oder Beschaffenheit der umzuschlagenden Packstücks (6) zu ermitteln.

11. Fachanlage nach Anspruch 7 bis 10,
**dadurch gekennzeichnet, dass** der wenigstens eine thermische Sensor (13) ein temperaturabhängiges Signal von einem bestimmten Fach (2,9) und/oder von einem in das bestimmte Fach (2,9) eingelegte Packstück (6) ermittelt und an die Auswerteeinheit (17) weiterleitet und dass, vorzugsweise, die Auswerteeinheit (17) anhand des temperaturabhängigen Signals, insbesondere anhand einer von der Auswerteeinheit (17) ermittelten Temperaturdifferenz, insbesondere zwischen dem Packstück (6) und dem Fach (2,9) oder zwischen dem Fach (2,9) und der Umgebung der Fachanlage (1), die Wahrscheinlichkeit einer Mindestbeschädigung ermittelt.

12. Fachanlage nach einem der Ansprüche 7 bis 11,
**dadurch gekennzeichnet, dass** in wenigstens einem dem wenigstens einen Sensor (13,14,15,20) zugeordneten Fach (2,9) eine Prüfstation (10) zum Aufprägen von wenigstens einer vorbestimmten Prüfbewegung auf ein Packstück (6) zum Indizieren von akustischen und/oder mechanischen Antwortsignalen in Abhängigkeit einer möglichen Beschädigung des Packstücks (6), insbesondere Packmittels und/oder Packguts, aufweist, dass der wenigstens eine dem Fach (2,9) zugeordnete akustische und/oder mechanische Sensor (14,20) zur Aufnahme der Antwortsignale ausgebildet ist und dass die Auswerteeinheit (17) anhand einer Mustererkennung des aufgenommenen Antwortsignals die Wahrscheinlichkeit einer Mindestbeschädigung ermittelt.

13. Fachanlage nach einem der Ansprüche 7 bis 12,
**dadurch gekennzeichnet, dass** die Auswerteeinheit (17) zur Durchführung einer Mustererkennung anhand einer Vielzahl von zuvor empirisch ermittelten Zusammenhängen von Geräuschen, Aufnahmen und/oder Antwortsignalen sowie möglichen Beschädigungen zugehöriger Packstücke (6), Packgüter und/oder Packmittel ausgebildet ist

14. Fachanlage nach Anspruch 12 oder 13,
**dadurch gekennzeichnet, dass** die Prüfstation (10) zum Aufprägen der Prüfbewegung auf das Packstück (6) wenigstens eine das Packstück (6) tragende Grundplatte (12) aufweist und dass die Grundplatte (12) dazu ausgebildet ist, in wenigstens einer Raumrichtung (x, y, z) bewegt und/oder um wenigstens eine Raumrichtung (x, y, z) geschwenkt zu werden.

15. Fachanlage nach einem der Ansprüche 12 bis 14,
**dadurch gekennzeichnet, dass** die Prüfstation (10) dazu ausgebildet ist, die Prüfbewegung, insbesondere die Frequenz und/oder die Amplitude der Prüfbewegung, in vorbestimmter Weise an das jeweilige Packstück (6) in Abhängigkeit des für dasselbe Packstück (6) zuvor bereits ermittelte Antwortsignals und/oder in Abhängigkeit der Art, der Größe und/oder der Beschaffenheit des Packstücks (6) angepasst wird.
